# EUROPÄISCHE PATENTSCHRIFT

(11) **EP 1 836 455 B1**
(45) Veröffentlichungstag und Bekanntmachung des Hinweises auf die Patenterteilung: **05.06.2013**
(21) Anmeldenummer: 06701169.2
(22) Anmeldetag: 12.01.2006
(51) Int. Cl.: G01C 11/02

(54) **VERFAHREN UND GEODÄTISCHES GERÄT ZUR VERMESSUNG WENIGSTENS EINES ZIELES**
METHOD AND GEODETIC DEVICE FOR SURVEYING AT LEAST ONE TARGET
PROCEDE ET APPAREIL GEODESIQUE POUR MESURER AU MOINS UNE CIBLE

(30) Priorität: 14.01.2005 EP 05000656
(43) Veröffentlichungstag der Anmeldung: 26.09.2007
(73) Patentinhaber: Leica Geosystems AG, 9435 Heerbrugg (CH)
(72) Erfinder: BRAUNECKER, Bernhard, CH-9445 Rebstein (CH); ROHNER, Marcel, CH-9410 Heiden (CH)
(74) Vertreter: Kaminski Harmann
(86) Internationale Anmeldenummer: PCT/EP2006/050177
(87) Internationale Veröffentlichungsnummer: WO 2006/075017

(56) Entgegenhaltungen:
- WO-A-00/25089
- DE-A1- 4 210 245
- US-A- 5 988 862

## Beschreibung

Die Erfindung betrifft ein Verfahren zur Vermessung wenigstens eines Zieles nach dem Oberbegriff des Anspruchs 1, ein geodätisches Gerät nach Anspruch 12 und ein Computerprogrammprodukt.

Für die Aufnahme von Eigenschaften definierter Punkte in einer Messumgebung, insbesondere von Daten mit räumlichem Bezug, sind seit der Antike eine Vielzahl von Messvorrichtungen bekannt. Als räumliche Standarddaten werden dabei der Ort eines Messgerätes nebst evtl. vorhandener Referenzpunkte, sowie Richtung, Entfernung und Winkel zu Zielen und Messpunkten aufgenommen.

Ein allgemein bekanntes Beispiel für solche Messvorrichtungen stellt der Theodolit dar. Eine Übersicht über geodätische Messvorrichtungen des Stands der Technik bieten "Elektronische Entfernungs- und Richtungsmessung" von R. Joeckel und M. Stober, 4. Auflage, Verlag Konrad Wittwer, Stuttgart 1999 und "Electronic Distance Measurement" von J.M. Rüeger, 4. Auflage, Springer-Verlag, Berlin, Heidelberg 1996.

Zur Steuerung des Messvorgangs werden neben Systemen mit Okular zunehmend auch Geräte mit Kamera-Bildschirm-Kombinationen verwendet, die eine ergonomisch günstige Anwendung erlauben. Zudem kann durch die Aufnahme eines optischen Bildes eine Zielidentifikation bzw. Zielverfolgung und somit eine Erleichterung und Automatisierung des Vermessungsvorgangs bewirkt werden.

So sind beispielsweise aus der EP 1 314 959 und der WO 2004/036145 geodätische Messgeräte mit einer elektronischen Anzeige- und Steuervorrichtung bekannt, die eine bildschirmbasierte Bedienung ermöglichen.

In der zweidimensionalen Darstellung des optischen Bildes können Punkte festgelegt werden, zu denen eine Vermessung, d.h. die Bestimmung von Entfernung und/oder Winkel erfolgt. Anhand der Abbildung können mit Verfahren der Bildverarbeitung Ziele identifiziert und verfolgt werden, so dass eine automatisierte Vermessung auf dieser Basis grundsätzlich möglich ist.

Jedoch besitzt dieses Bild keinerlei Tiefeninformation, so dass die Bildverarbeitungsverfahren auf entsprechende Vorinformationen, Bildaufnahmebedingungen, wie z.B. der Vorausrichtung einer Zielmarke, oder Bildeigenschaften, wie z.B. Helligkeit und Kontrast, angewiesen sind. Die Möglichkeiten der Zielidentifikation und -verfolgung werden durch die rein visuelle Erfassung limitiert. Insbesondere können optische Mehrdeutigkeiten nicht aufgelöst werden, wie sie beispielsweise bei gekrümmten Oberflächen auftreten. So können in einer frontalen Aufnahme unter ungünstigen Lichtverhältnissen eine Scheibe und eine Kugel in beiden Fällen als identisches Abbild erscheinen.

Die Aufnahme von rein visuellen Bildern limitiert somit die Steuerung und Automatisierung von Messprozessen hinsichtlich der Umweltbedingungen und Zielgeometrien.

Zur Erzeugung von Topographien als statischen Bildern mit Tiefeninformation wird in der Luftbildphotogrammetrie während eines Kamerafluges bzw. einer Aufnahmebewegung Bilder von der Erdoberfläche bzw. einem Himmelskörpers unter mindestens zwei verschiedenen Winkeln aufgenommen, aus denen aufgrund der Kollinearitätsbeziehung eine Höheninformation, beispielsweise zu Erstellung von Kartenmaterial, errechnet werden kann. In modernen Umsetzungen dieser Methode werden photographische Aufnahmen durch Einscannen zur elektronischen Weiterverarbeitung digitalisiert oder aber bereits während des Fluges digital aufgenommen.

Aus der EP 1 418 401 und der DE 42 10 245 A1 sind Verfahren und Vorrichtungen zur luft- oder raumgestützten Photogrammetrie bekannt, bei denen während eines Kamerafluges mit einem Luftfahrzeug zur Aufnahme photogrammetrisch verwendbarer Bilder zusätzlich Distanzmessungen zu Stützstellen mit Laserstrahlen eines Laserentfernungsmessers durchgeführt werden. Die Distanzmessungen werden jeweils für einen Satz von Bildpunkten aufgenommen und später als Zwangsbedingungen für die Erstellung einer Topographie der Oberfläche verwendet. Aufgenommene Distanzmessungen können darüber hinaus zu einer Optimierung der Aufnahme- und Flugparameter verwendet werden.

Während der Erzeugung von Luftbildern, vorzugsweise mit einer mehrzeiligen Sensor-Kamera, werden hier zusätzlich zur Aufnahme von Bildpunkten Distanzmessungen zu Stützstellen mit durchgeführt, die jeweils einem Satz von mindestens einem Bildpunkt zugeordnet werden. Diese Distanzmessungen erfolgen mit Laserentfernungsmessern.

Eine Alternative zur herkömmlichen Photogrammetrie ist durch die direkte Entfernungsmessung vom Luftfahrzeug zu einzelnen Punkten mittels laserbasierter Distanzmessung (LIDAR) entstanden, siehe z.B. US 5 988 862 A. Allerdings ist dieses Verfahren nicht in der Lage, im vergleichbaren Umfang weitere Informationen, beispielsweise in verschiedenen Spektralbereichen, zu liefern. Zudem erfolgt die Bildaufnahme abtastend, d.h. sequentiell, so dass die Eignung in Anwendungen, für die eine schnelle Verfügbarkeit der Bildinformation entscheidend ist, nicht besteht.

Ausserdem weisen LIDAR-Systeme mit einem abtastend geführten Strahl Nachteile auf, die aus dem mechanischen Aufbau resultieren. Entweder muss das gesamte Gerät über den aufzunehmenden Sichtbereich bewegt werde oder es muss die Strahlführung bei ansonsten unveränderlicher Vorrichtung variabel gestaltet werden. Neben dem Aufwand für solche mechanisch und/oder optisch anspruchsvollen bzw. komplexen Lösungen weisen diese meist eine nur geringe Abtastgeschwindigkeit auf und besitzen darüber hinaus einen vergleichsweise hohen Energieverbrauch.

Systeme, die auf einer sequentiellen Erfassung von zusätzlicher Tiefen- bzw. Entfernungsinformation basieren, besitzen zudem das Problem der mechanischen Stabilität. Aufgrund der abtastenden Bewegung und mechanischer Belastungen, z.B. durch Vibrationen, ist die Korrelation der Entfernungsmessungen mit den Bildpunkten des visuellen Bildes nicht oder nur mit zusätzlichem Aufwand zu gewährleisten.

Die Aufgabe der vorliegenden Erfindung besteht in der Bereitstellung eines Verfahrens bzw. einer Vorrichtung zur geodätischen Vermessung, die eine verbesserte Zielerkennung erlauben.

Eine weitere Aufgabe besteht in der Verbesserung der Steuerung des Messvorgangs für ein gattungsgemässes geodätisches Gerät.

Diese Aufgaben werden erfindungsgemäss durch die Merkmale der Ansprüche 1 und 12 sowie durch die kennzeichnenden Merkmale der abhängigen Ansprüche gelöst bzw. die Lösungen fortgebildet.

Der Erfindung liegt die Idee zugrunde, durch zusätzliche Distanzmessungen zwischen Aufnahmesystem und Oberfläche weitere Tiefeninformationen über den Erfassungsbereich des visuellen Bildes zu erhalten, die zur Steuerung des Messprozesses und zur Zielerkennung genutzt werden können.

Die Erfindung betrifft dabei im weiteren Sinn alle geodätischen Geräte, die durch visuelle Richtmittel auf Messpunkte optisch ausgerichtet werden oder eine solche Ausrichtung unterstützen. Unter dem Begriff "geodätisches Gerät" soll in diesem Zusammenhang verallgemeinernd stets ein Messinstrument verstanden werden, das über Vorrichtungen zur Messung oder Überprüfung von Daten mit räumlichem Bezug verfügt. Insbesondere betrifft dies die Messung von Entfernung und/oder Richtung bzw. Winkeln zu einem Bezugs- oder Messpunkt. Darüber hinaus können jedoch noch weitere Vorrichtungen, z.B. Komponenten zur satellitengestützten Ortsbestimmung (bspw. GPS, GLONASS oder GALILEO), vorhanden sein, die für ergänzende Messungen oder Datenaufnahmen verwendet werden können. Insbesondere sollen hier unter einem solchen geodätischen Messgerät Theodoliten und auch sogenannte Totalstationen als Tachymeter mit elektronischer Winkelmessung und elektrooptischem Entfernungsmesser verstanden werden. Gleichermassen ist die Erfindung zur Verwendung in spezialisierten Vorrichtungen mit ähnlicher Funktionalität geeignet, z.B. in militärischen Richtkreisen oder in der industriellen Bauwerks- oder Prozessüberwachung; diese Systeme werden hiermit ebenfalls unter dem Begriff "geodätisches Gerät" erfasst.

Erfindungsgemäss wird in ein geodätisches Gerät mit einer Kamera eine weitere Komponente integriert, die zur Aufnahme von Entfernungsmessungen zu ausgewählten Punkten bzw. mit definierten Ausrichtungen innerhalb des Erfassungsbereichs des visuellen Kanals ausgebildet ist. Die durch diese Komponente aufgenommenen Distanzen werden mit Punkten im Bild des visuellen Kanals korreliert, so dass über die im visuellen Bild sichtbaren Strukturen Informationen abgeleitet werden können.

Als Aufnahmekomponenten des visuellen Bildes stehen beispielsweise mit CCD- oder CMOS-Kameras geeignete Vorrichtungen zur Verfügung, die ein Bild mit einer Vielzahl von Bildpunkten erfassen.

Als Mittel zur Aufnahme von Entfernungen stehen verschiedene Alternativen zur Verfügung. Zum einen können Messungen durch mehrere separate Entfernungsmesser zeitgleich zu allen oder gruppenweise in zeitlicher Kohäsion, d.h. unmittelbar aufeinanderfolgend, zu mehreren Punkten im Erfassungsbereich durchführen, wobei die einzelnen Entfernungsmesser bezüglich der Bildpunkte justiert werden müssen. Zum anderen stehen auch integrierte Lösungen, z.B. Chips als flächige Anordnungen von Einzelsensoren mit integrierter Entfernungsmessfunktionalität zur Verfügung. Solche Range Imaging Module (RIM) weisen beispielsweise 32 x 32 Sensoren in Matrixanordnung auf. Durch diese Matrix kann ein Entfernungsbild als räumliche Verteilung diskreter Distanzpunkte im Erfassungsbereich aufgenommen werden. Zwar ist bei dieser Zahl von Sensorpunkten und damit Entfernungsbildpunkten die laterale Auflösung nicht hinreichend, um alleine anhand des Entfernungsbildes präzise Steuerungs- und Identifikationsaufgaben zu bewältigen. Durch die Kombination mit dem visuellen Bild kann für dieses jedoch die benötigte Tiefeninformation zur Verfügung gestellt werden. Zum Beispiel können das visuelle und das Entfernungsbild logisch oder optisch überlagert werden, so dass für einzelne Bildpunkte oder Gruppen von Bildpunkten auch deren Abstand bzw. deren mittlerer Abstand zum Gerät bekannt ist.

Unter Entfernungsbild wird hierbei eine zweidimensionale Anordnung von Distanzmesswerten verstanden, die zumindest einen Teilbereich des Erfassungsbereichs der Kamera mit der zur Steuerung oder Zielerkennung notwendigen Kohäsion abdecken. Dabei können auch verschiedene Stufen der Kohäsion, beispielsweise für aufeinanderfolgen Schritte der Zielerkennung mit steigender Genauigkeit, verwendet werden. Dabei kann es genügen, wenn für einen Bildpunkt oder eine Gruppe von Bildpunkten nur ein einziger Distanzwert aufgenommen wird. In vielen Fällen erlauben aber identifizierbare zusammenhängende Strukturen im Entfernungsbild ein Matching mit Strukturen des visuellen Bildes, so dass Objekte im Erfassungsbereich identifiziert und hinsichtlich der Entfernung oder der Abfolge im Erfassungsbereich klassifiziert werden können.

Die vorrichtungsseitige Umsetzung des Verfahrens kann sowohl unter Verwendung von getrennten Bauteilen für Entfernungsmessung und Bildaufnahme wie auch unter Integration beider Funktionen in einzelne Bauteile erfolgen. Die mit den Entfernungsmesspunkten vorgenommene Distanzmessung von einem vorgegebenen Bezugspunkt im Gerät zu einem Distanzpunkt im Erfassungsbereich muss in Bezug zu der visuellen Bildaufnahme gesetzt werden können, so dass solange diese Bedingung erfüllt ist, verschiedene Orientierungen und Anordnungen der verschiedenen Komponenten möglich sind. Der die Distanzmessung definierende Bezugspunkt wird meistens durch den Aufbau und die Anordnung der entfernungsbildaufnehmenden Komponente im Gerät gegeben.

Die von den Mitteln zur Aufnahme eines Entfernungsbildes aufgenommenen Distanzpunkte bzw. die Ausrichtung der Achsen der Entfernungsmessungen können innerhalb des Erfassungsbereichs des visuellen Bildes statistisch oder mit einem spezifischen Muster verteilt sein. Da zumeist nur Teilbereiche des Erfassungsbereichs zur Zielerkennung und/oder Vermessungssteuerung näher aufgelöst werden müssen, kann die Lage und Dichte der Distanzpunkte auch variabel gestaltet werden. Hierdurch werden auch gestufte Verfahren möglich, bei denen zuerst ein visueller oder entfernungsbildbasierter Grobsuchlauf oder eine Grobanzielung erfolgt, auf die dann eine höhere Auflösung in einem kleinen Bereich erfolgt. Zu diesem Zweck können beispielsweise in den Strahlgang vor die Mittel zur Aufnahme eines Entfernungsbildes strahlmodifizierende Komponenten eingebracht werden, wie z.B. Arrays aus Mikrolinsen oder Hologramme. Alternativ oder ergänzend können jedoch die Mittel selbst innerhalb des Strahlgangs

*bewegt werden. Beispiele zur Realisierung einer Bewegung von Komponenten relativ zum geräteinternen Strahlgangs bzw. zur Variation der Emissions- und Empfangsrichtung bei ansonsten unverändertem Erfassungsbereich der Optik können der WO 2004/036145 entnommen werden.

Die Auswahl der Anordnung von aufzunehmenden Distanzpunkten kann dabei auch anhand von Entfernungsinformationen gesteuert werden. So kann beispielsweise in einem ersten Schritt ein Entfernungsbild des gesamten Erfassungsbereichs aufgenommen werden. In diesem Entfernungsbild werden nachfolgend Regionen mit besonders grosser Varianz der aufgenommenen Entfernungen identifiziert und in einem zweiten Schritt mit höherer Auflösung aufgenommen und analysiert.

Das erfindungsgemässe Verfahren und ein erfindungsgemässes Gerät werden nachfolgend anhand von in der Zeichnung schematisch dargestellten Ausführungsbeispielen rein beispielhaft näher beschrieben oder erläutert. Im einzelnen zeigen
- Fig.1: die Darstellung der Komponenten eines erfindungsgemässen geodätischen Gerätes;
- Fig.2: die Darstellung einer ersten Verteilung von zu erfassenden Distanzpunkten im Erfassungsbereich;
- Fig.3a-d: die Darstellung einer weiteren Verteilungen von zu erfassenden Distanzpunkten im Erfassungsbereich;
- Fig.4: ein Anwendungsbeispiel für ein erfindungsgemässes Verfahren bzw. geodätisches Gerät;
- Fig.5: die Darstellung von visuellem Bild und Entfernungsbild;
- Fig.6: die Zuordnung von visuellem Bild und Entfernungsmessungen zur Aufnahme eines Entfernungsbildes und
- Fig.7: die Darstellung eines Beispiels für ein Entfernungsbild.

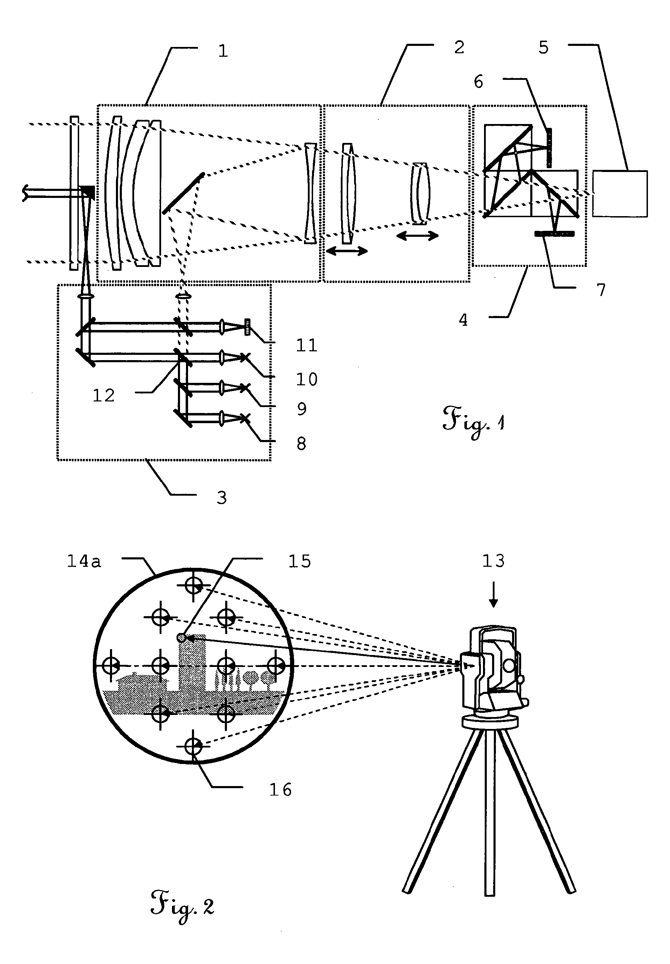

In Fig.1 erfolgt die Darstellung der Komponenten eines erfindungsgemässen geodätischen Gerätes. Das Gesamtsystem besteht aus den Baugruppen Voroptik 1, Autofokus- und Zoom-Gruppe 2, infiniter Plattform 3 und finiter Plattform 4 sowie optional einer Okulareinheit 6. Die infinite Plattform 3 trägt die Komponenten Sender 9 und Empfänger 10 zur Entfernungsmessung zum Zielobjekt, Beleuchtungslaser 8 und Empfängereinheit 11 für die automatische Zielerkennung. Die Strahlgänge von Beleuchtungslaser 8, Sender 9 und Empfänger 10 können durch ein Mikroscannerelement 12 gemeinsam variiert werden, so dass eine Vermessung des Ziels bzw. eine automatische Zielerkennung im Erfassungsbereich möglich wird. Die Zielerkennung basiert hierbei auf dem gegenüber dem Hintergrund erhöhten Reflexionsvermögen eines kooperativen Zieles. Eine erfindungsgemässe Verbesserung der Steuerung und der Zielerkennung wird durch die Integration eines RIM-Sensorarray 7 in die finite Plattform 4 ermöglicht. Dieser RIM-Sensorarray 7 nutzt einen gemeinsamen Strahlgang mit einer Kamera 6. Beide Komponenten nutzen die Autofokus- und Zoom-Gruppe 2, nach der sie in den Strahlgang integriert sind. In diesem Ausführungsbeispiel sind Kamera 6 und RIM-Sensorarray 7 fix zueinander positioniert, so dass die aufzunehmenden Distanzpunkte bzw. die Ausrichtungen der Distanzmessungen zu Punkten im Erfassungsbereich jeweils einzelnen Bildpunkten oder Bildpunktmengen der Kamera 6 zugeordnet sind.

In alternativen Ausführungsbeispielen können die Zuordnungen zu den Bildpunkten bzw. die Anordnungsgeometrie der Sensorpunkte des RIM-Sensorarrays 7 variiert werden. Hierzu kann entweder das RIM-Sensorarrays 7 im Strahlgang bewegt und/oder die Strahlführung verändert werden, z.B. durch das Einbringen von Mikrolinsenarrays oder holographischen Elementen in den Strahlgang. Dieses Einbringen ist beispielsweise durch hier nicht dargestellte rotierbare Trägerscheiben oder verschiebbare lineare Anordnungen möglich.

Fig.2 zeigt die Darstellung einer ersten Verteilung von zu erfassenden Distanzpunkten 16 im Erfassungsbereich 14a. Durch eine Totalstation als geodätisches Gerät 13 wird im Erfassungsbereich 14a ein zu vermessender Geländeabschnitt aufgenommen. Innerhalb des Erfassungsbereichs 14a erfolgen Winkel- und Entfernungsmessungen zu ausgewählten Messpunkten 15, deren Vermessung die eigentliche Anwendung des geodätischen Geräts 13 ist. Parallel zur Aufnahme des Erfassungsbereichs 14a durch eine Kamera erfolgt die Distanzmessung zu Distanzpunkten 16, welche in diesem Beispiel eine erste Verteilung in einem regelmässigen Muster aufweisen, wobei das Muster im wesentlichen den gesamten Erfassungsbereich 14a abdeckt. Eine solche erste Verteilung kann beispielsweise durch mehrere separate Entfernungsmesseinheiten oder durch ein Sensorarray mit einem vorgeschalteten optischen Element zur Strahlführung bzw. zur Aufweitung oder Ausrichtung von Strahlachsen zu den Sensorpunkten. Hiermit kann auch mit nur wenigen Sensorpunkten oder Entfernungsmesseinheiten ein vergleichsweise grosser Erfassungsbereich 14a abgedeckt werden. Die Distanzmessung zu den Distanzpunkten 16 erfolgt für mindestens zwei Distanzpunkte 16 zeitgleich, vorzugsweise aber für die gesamte Verteilung der Distanzpunkte 16 zur gleichen Zeit und in einem Vorgang. Gegebenenfalls können aber auch mehrere Gruppen aus jeweils wenigstens zwei Distanzpunkten 16 sequentiell aufgenommen werden, z.B. wenn ein Sensorarray mit nur wenigen Sensoren genutzt werden soll, um dennoch eine grössere Anzahl von Distanzpunkten 16 zu vermessen. Durch eine gleichzeitige Distanzmessung zu wenigstens zwei, insbesondere aber mehreren oder vielen Distanzpunkten 16 wird es möglich, das visuelle Bild mit Distanzinformationen in Echtzeit zu kombinieren. Diese Gleichzeitigkeit der Messung bedeutet zumindest das zeitliche Überlappen der Distanzmessungen zu den wenigstens zwei Distanzpunkten 16.

Wird die Distanzinformation mit einer Rate bereitgestellt, welcher der optischen Aufnahmerate des visuellen Bildes oder aber der Benutzerinteraktion unter Nutzung des visuellen Bildes entspricht, so erfolgt keine unerwünschte Verzögerung dieses visuell gesteuerten Prozesses. Dies ist insbesondere der Fall, wenn Distanzmessung zu den Distanzpunkten 16 und Erfassung des visuellen Bildes zeitgleich erfolgen, wobei die Gleichzeitigkeit - neben einer physikalischen Gleichzeitigkeit - durch die Rate der Erfassung des visuellen Bildes bzw. die Benutzerhandlungen bestimmt wird, welche somit die zeitlich notwendige Auflösung festlegen.

Eine Gleichzeitigkeit verhindert dabei eventuell mögliche Abweichungen und Unterschiede zwischen der Orientierung bei der Distanzmessung zu den Distanzpunkten 16 und der Erfassung des visuellen Bildes. Deshalb können diese beiden Vorgänge vorteilhaft zeitgleich und insbesondere unter Nutzung eines zumindest teilweise gemeinsamen Strahlgangs bzw. gemeinsam genutzter Komponenten durchgeführt werden. Diese synchrone oder simultane Aufnahme von Distanzmessungen und visuellem Bild gewährleistet aufgrund der zeitlichen Kohäsion eine Verknüpfbarkeit der beiden Messungsarten, sodass für die Steuerung der Anwendungsprozesse zusätzlich Distanzinformationen zu Identifikation von Strukturen im visuellen Bild genutzt werden können. Die Zeitgleichheit bzw. Simultanität erlaubt ein verzögerungsfreies Ausführen des über das visuelle Bild gesteuerten Vorgangs, was beispielsweise bei einer scannend punktweisen Aufnahme von Distanzmessungen so nicht realisierbar wäre.

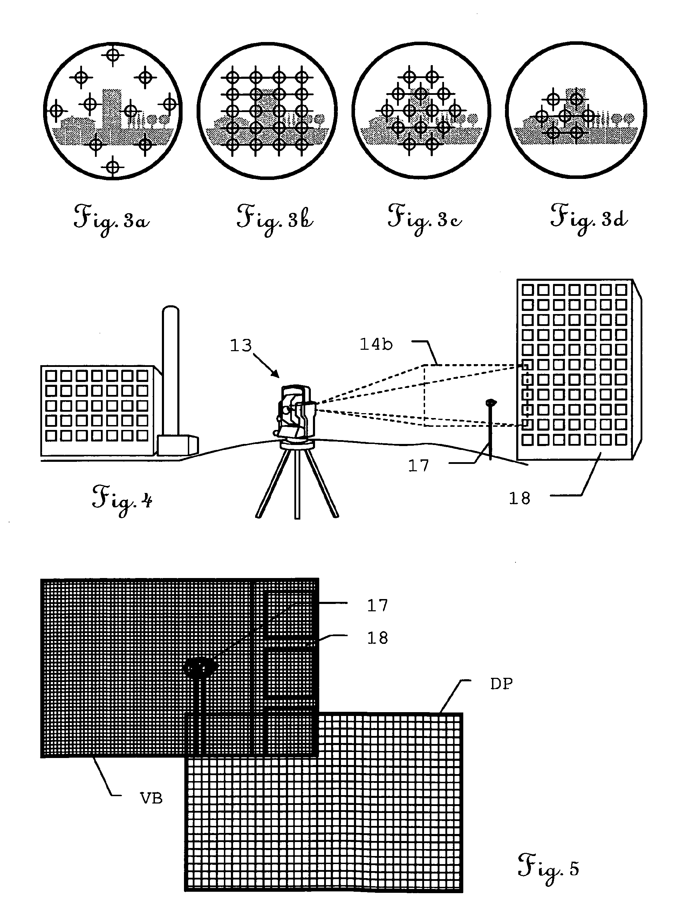

Die Fig.3a-d bieten Beispiele von weiteren Verteilungen der zu erfassenden Distanzpunkten im Erfassungsbereich. In diesen Fig.3a-d, wie auch in Fig.2, sind rein exemplarisch nur wenige zu erfassende Distanzpunkte dargestellt. Die Zahl der zu verwendenden Punkte bzw. der zugeordneten Sensorpunkte oder Entfernungsmesseinheiten kann jedoch deutlich grösser, z.B. *32²=1024*, oder auch kleiner sein.

Fig.3a zeigt eine statistische oder zufällige Verteilung der Distanzpunkte im Erfassungsbereich.

In Fig.3b wird der Fall eines regelmässigen Musters mit äquidistanten Zeilen und Spalten dargestellt, wie es beispielsweise in RIM-Sensorarrays realisiert wird. Dieses Muster füllt den grössten Teil des Erfassungsbereichs gleichmässig aus.

Eine andere, hexagonale Anordnung der Distanzpunkte zeigt Fig.3c. Dieses Muster approximiert eine kreisförmige Fläche besser als rechteckige Formen. Hier ist eine Konzentration der Distanzpunkte im meist am intensivsten genutzten Zentrum des Erfassungsbereichs dargestellt. Wird die Ausdehnung des Hexagons grösser gewählt, so das Muster den Erfassungsbereichs gleichmässiger als in Fig.3b aus.

Fig.3d zeigt schliesslich ein im Erfassungsbereich bewegbares Muster, das in Zonen grösserer Relevanz positioniert werden kann. In diesem Beispiel sind die Gebäude das Ziel der Vermessung, wohingegen der Himmel oder die Baumgruppen keine vermessungstechnische Relevanz besitzen. Zur Erhöhung der Auflösung können nun alle Distanzpunkte, z.B. durch Veränderung der Ausrichtung der Strahlachsen, in einen Teil des Erfassungsbereichs bewegt werden.

Fig.4 erläutert das erfindungsgemässe Verfahren bzw. ein erfindungsgemässes geodätisches Gerät 13 anhand eines Anwendungsbeispiels zur automatisierten Zielerkennung. Durch einen Totalstation als geodätisches Gerät 13 soll in bebautem Gelände ein Lotstock 17 mit Reflektor als kooperatives Ziel erkannt und automatisch angezielt werden. Aufgrund der Fenster eines im Erfassungsbereich 14b befindlichen Gebäudes 18 können Reflexe entstehen, die eine Identifikation des Lotstocks 17 alleine anhand seiner hohen Albedo erschweren können. Ähnlich ungünstige Konstellationen können sich beispielsweise auch bei niedrigem Sonnenstand oder bei Strassenverkehr mit spiegelnden Fahrzeugoberflächen ergeben. Insbesondere für nicht-kooperative Ziele ist unter solchen Bedingungen eine automatisierte Zielerkennung nicht zu leisten.

Zur automatisierten Erkennung des Lotstocks 17 wird dieser, wie in Fig.5 gezeigt, durch die Kamera der Totalstation in einem visuellen Bild VB aufgenommen. Dieses visuelle Bild VB enthält ebenfalls noch Anteile des Gebäudes 18 mit spiegelnden Flächen. Parallel zu dieser Erfassung erfolgt die Aufnahme eines Entfernungsbilds, dessen aufnehmendes Sensorarray sich aus einer Matrix von Sensorpunkten zur Messung der Distanzpunkte DP zusammensetzt. In diesem Beispiel entspricht die durch die Matrix der Distanzpunkte DP erreichte Abdeckung dem visuellen Bild VB und damit dem Erfassungsbereich des Gerätes, wobei jedem Distanzpunkt DP jeweils mehrere Bildpunkte des visuellen Bildes VB zugeordnet sind.

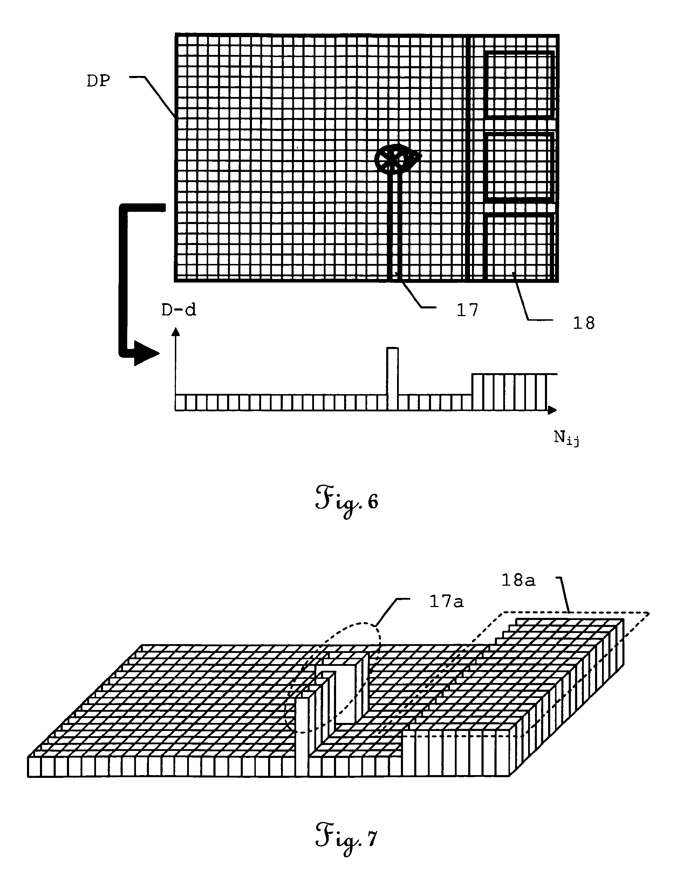

Durch die Sensorpunkte werden die Distanzpunkte DP mit der in Fig.6 dargestellten Auflösung vermessen. In der Fig.6 sind in der oberen Abbildung die Positionen des Lotstocks 17 und des Gebäudes 18 innerhalb der Distanzpunkte DP herausgestellt. Die für die einzelnen Distanzpunkte gemessenen Distanzen sind in der unteren Abbildung für eine Zeile der Distanzpunkte DP dargestellt. In dieser rein beispielhaften Darstellungsweise ist die Differenz von gemessener Entfernung d und einer angenommenen Maximaldistanz D aufgetragen. Für nicht bestimmbare Distanzwerte, z.B. bei Messungen gegen den Himmel, kann beispielsweise ein vorgegebener Wert als Platzhalterwert angesetzt werden. Für jeden der Pixel Nᵢⱼ ist der zugehörige Wert für D-d angegeben, so dass ein Entfernungsprofil entsteht, in dem der Lotstock 17 und das Gebäude 18 als Strukturen im Erfassungsbereich identifiziert werden können.

Fig.7 zeigt die Darstellung des gemäss Fig.6 aufgenommenen Entfernungsbildes als ein Beispiel zur Identifikation von Strukturen und der Zuordnung von Bildpunkten. Dargestellt ist die Matrix der Distanzpunkte mit den jeweiligen Distanzwerten D-d. In dieser Matrix können zusammenhängende Regionen von Distanzwerten identifiziert werden, die den Strukturen des visuellen Bildes zugeordnet werden können. Somit sind im Entfernungsbild ein erste Region als Abbild 17a des Lotstocks und ein zweite Region 18a als Abbild des Gebäudes identifizierbar. Die Identifikation und Zuordnung der Regionen zu Objekten im visuellen Bild kann beispielsweise mit bekannten Verfahren der Bildverarbeitung erfolgen. Grundsätzlich können hierbei jeweils für visuelles Bild und Entfernungsbild getrennt Strukturen identifiziert werden, die in einem nachfolgenden Schritt zusammengeführt werden oder aber es können - ohne getrennte Strukturerkennung in beiden Bildern - direkte Zuordnungen von Bild- und Distanzpunkten gebildet werden, aus deren Aggregat die Objekte bzw. Strukturen identifiziert werden.

Die dargestellten Ausführungsformen und Figuren stellen nur erläuternde Beispiele für erfindungsgemässe Realisierungen dar und sind daher nicht abschliessend und einschränkend zu verstehen. Insbesondere sind die Zahlen der dargestellte Bild- und Distanzpunkte lediglich aus Darstellungsgründen gewählt worden.

## Patentansprüche

1. Verfahren zur Vermessung wenigstens eines Zieles (17) mit einem geodätischen Gerät (13), mit
• einem Erfassen eines visuellen Bildes (VB) eines Erfassungsbereichs (14a, 14b) durch eine Kamera (6) des Gerätes (13), wobei die Kamera (6) eine Vielzahl von Bildpunkten aufweist, und
• einem geodätischen Winkel- und/oder Entfernungsmessen zum Ziel (17),
wobei das Winkel- und/oder Entfernungsmessen vermittels des visuellen Bildes (VB) unterstützt oder gesteuert wird,
**gekennzeichnet durch**
ein zeitgleiches Aufnehmen von wenigstens zwei diskreten Distanzpunkten (DP) zur Bereitstellung eines Entfernungsbildes als räumliche Verteilung diskreter Distanzpunkte (DP) im Erfassungsbereich (14a, 14b), insbesondere zeitgleich zum Erfassen des visuellen Bildes (VB).

2. Verfahren nach Anspruch 1,
**dadurch gekennzeichnet, dass**
das Aufnehmen des Entfernungsbilds durch Distanzmessungen zu den Distanzpunkten (DP) erfolgt, wobei die Zahl der Distanzpunkte (DP) kleiner als die Zahl der Bildpunkte ist und wobei wenigstens einem Distanzpunkt (DP) mindestens ein Bildpunkt zugeordnet ist.

3. Verfahren nach Anspruch 1 oder 2,
**dadurch gekennzeichnet, dass**
eine Ausrichtung der Distanzmessungen im Erfassungsbereich (14a, 14b) variiert wird, vorzugsweise in Abhängigkeit von gemessenen Distanzwerten, insbesondere in Abhängigkeit von der Verteilung der Distanzwerte.

4. Verfahren nach Anspruch 3,
**dadurch gekennzeichnet, dass**
die Ausrichtung der Distanzmessungen im Erfassungsbereich (14a, 14b) nach einem stochastischen Muster erfolgt.

5. Verfahren nach Anspruch 3,
**dadurch gekennzeichnet, dass**
die Ausrichtung der Distanzmessungen im Erfassungsbereich (14a, 14b) nach einem regelmässigen Muster erfolgt.

6. Verfahren nach einem der vorangehenden Ansprüche,
**dadurch gekennzeichnet, dass**
im Entfernungsbild zusammenhängende Regionen (17a, 18a) von Distanzpunkten identifiziert werden.

7. Verfahren nach einem der vorangehenden Ansprüche,
**dadurch gekennzeichnet, dass**
das visuelle Bild (VB) und das Entfernungsbild überlagert werden.

8. Verfahren nach Anspruch 6 und 7,
**dadurch gekennzeichnet, dass**
in visuellen Bild (VB) Objekte anhand einer Korrelation von zusammenhängende Regionen und Merkmalen des visuellen Bildes (VB) identifiziert werden.

9. Verfahren nach einem der vorangehenden Ansprüche,
**dadurch gekennzeichnet, dass**
aus dem Entfernungsbild die räumlichen Lage eines Objektes, insbesondere des Zieles (17), im Erfassungsbereich (14a, 14b) abgeleitet wird.

10. Verfahren nach einem der vorangehenden Ansprüche,
**dadurch gekennzeichnet, dass**
aus dem Entfernungsbild die räumlichen Abfolge mehrerer Objekte im Erfassungsbereich (14a, 14b) abgeleitet wird.

11. Verfahren nach einem der vorangehenden Ansprüche,
**dadurch gekennzeichnet, dass**
anhand des Entfernungsbildes eine Identifikation eines Gegenstandes, insbesondere eine Zielerkennung, erfolgt.

12. Geodätisches Gerät (13), insbesondere Tachymeter, eingerichtet zur Durchführung des Verfahrens nach einem der Ansprüche 1 bis 11, mit wenigstens
- einer Kamera (6), insbesondere einer CCD- oder CMOS-Kamera, zum Erfassen eines visuellen Bildes (VB) eines Erfassungsbereichs (14a, 14b), wobei die Kamera (6) eine Vielzahl von Bildpunkten aufweist,
- einer Winkel- und/oder Distanzmessungskomponente,
- einer Steuereinheit zum Steuern der Winkel- und/oder Distanzmessungskomponente, insbesondere vermittels des visuellen Bildes (VB),
**gekennzeichnet durch**
Mittel zum zeitgleichen Aufnehmen von wenigstens zwei diskreten Distanzpunkten (DP) zur Bereitstellung eines Entfernungsbildes als räumliche Verteilung diskreter Distanzpunkte (DP) im Erfassungsbereich (14a, 14b).

13. Geodätisches Gerät (13) nach Anspruch 12, mit wenigstens
**dadurch gekennzeichnet, dass**
die Zahl der durch die Mittel zum Aufnehmen eines Entfernungsbildes aufgenommenen Distanzpunkte (DP) kleiner als die Zahl der Bildpunkte ist, wobei wenigstens einem Distanzpunkt (DP) mindestens ein Bildpunkt zugeordnet ist.

14. Geodätisches Gerät (13) nach Anspruch 12 oder 13, mit wenigstens
**gekennzeichnet durch**
ein Fokussierglied (2) in einem Strahlgang zur Kamera (6), wobei im Strahlgang die Mittel zum Aufnehmen eines Entfernungsbildes nach dem Fokussierglied (2) angeordnet sind.

15. Geodätisches Gerät (13) nach Anspruch 14, mit wenigstens
**gekennzeichnet durch**
in den Strahlgang einbringbare, insbesondere in Verbindung mit einem rotier- oder verschiebbaren Trägerelement, Mittel zur Ausrichtung der Distanzmessungen im Erfassungsbereich (14a, 14b), insbesondere mit Mikrolinsen oder holographischen Elementen.

16. Computerprogrammprodukt mit Programmcode, der auf einem maschinenlesbaren Träger gespeichert oder durch eine elektromagnetische Welle verkörpert ist, zur Durchführung des Verfahrens nach einem der Ansprüche 1 bis 11 wenn das Programm in einem Computer ausgeführt wird.

## Claims

1. Method for surveying at least one target (17) by a geodetic device (13), comprising
• capture of a visual image (VB) of an area (14a, 14b) or capture by a camera (6) of the device (13), the camera (6) having a multiplicity of image points, and
• a geodetic angle and/or distance measurement to the target (17),
the angle and/or distance measurement being supported or controlled by means of the visual image (VB),
**characterized by** simultaneous recording of at least two discrete distance points (DP) for the provision of a distance image as a spatial distribution of discrete distance points (DP) in the area (14a, 14b) of capture, in particular simultaneously with the capture of the visual image (VB).

2. Method according to Claim 1, **characterized in that** the recording of the distance image is effected by distance measurements to the distance points (DP) the number of distance points (DP) being smaller than the number of image points and at least one image point being coordinated with at least one distance point (DP).

3. Method according to Claim 1 or 2, **characterized in that** an orientation of the distance measurements in the area (14a, 14b) of capture is varied, preferably as a function of measured distance values, in particular as a function of the distribution of the distance values.

4. Method according to Claim 3, **characterized in that** the orientation of the distance measurements in the area (14a, 14b) of capture takes place according to a stochastic pattern.

5. Method according to Claim 3, **characterized in that** the orientation of the distance measurements in the area (14a, 14b) of capture takes place according to a regular pattern.

6. Method according to any of the preceding Claims, **characterized in that** cohesive regions (17a, 18a) of distance points are identified in the distance image.

7. Method according to any of the preceding Claims, **characterized in that** the visual image (VB) and the distance image are superposed.

8. Method according to Claims 6 and 7, **characterized in that**, in the visual image (VB) objects are identified on the basis of a correlation of cohesive regions and features of the visual image (VB).

9. Method according to any of the preceding Claims, **characterized in that** the spatial position of an object, in particular of the target (17), in the area (14a, 14b) of capture is derived from the distance image.

10. Method according to any of the preceding Claims, **characterized in that** the spatial sequence of a plurality of objects in the area (14a, 14b) of capture is derived from the distance image.

11. Method according to any of the preceding Claims, **characterized in that** an identification of an object, in particular target recognition, is effected on the basis of the distance image.

12. Geodetic device (13), in particular tacheometer, designed for carrying out the method according to any of Claims 1 to 11, comprising at least
- a camera (6), in particular a CCD or CMOS camera, for capturing a visual image (VB) of an area (14a, 14b) of capture, the camera (6) having a multiplicity of image points,
- an angle- and/or distance-measuring component,
- a control unit for controlling the angle-and/or distance-measuring component, in particular by means of the visual image (VB),
**characterized by** means for simultaneous recording of at least two discrete distance points (DP) for providing a distance image as spatial distribution of discrete distance points (DP) in the area (14a, 14b) of capture.

13. Geodetic device (13) according to Claim 12, **characterized in that** the number of distance points (DP) recorded by the means for recording a distance image is smaller than the number of image points, at least one image point being coordinated with at least one distance point (DP).

14. Geodetic device (13) according to Claim 12 or 13, **characterized by** a focusing member (2) in a beam path to the camera (6), the means for recording a distance image being arranged after the focusing member (2) in the beam path.

15. Geodetic device (13) according to Claim 14, **characterized by** means which can be introduced into the beam path, in particular in conjunction with a rotatable or displaceable support element, for orientation of the distance measurements in the area (14a, 14b) of capture, in particular having microlenses or holographic elements.

16. Computer program product having program code which is stored on a machine-readable medium or is embodied by an electromagnetic wave, for carrying out the method according to any of Claims 1 to 11, if the program is executed in a computer.

## Revendications

1. Procédé pour mesurer au moins une cible (17) avec un appareil géodésique (13) avec
• une détection d'une image visuelle (VB) d'une plage de détection (14a, 14b) par une caméra (6) de l'appareil (13), la caméra (6) présentant une multitude de points d'image et
• une mesure géodésique d'angle et/ou de distance à la cible (17),
la mesure d'angle et/ou de distance étant supportée ou commandée au moyen de l'image visuelle (VB),
**caractérisé par**
une prise en même temps d'au moins deux points de distance discrets (DP) pour mettre à disposition une image de distance comme répartition spatiale de points de distance discrets (DP) dans la plage de détection (14a, 14b), en particulier en même temps pour la détection de l'image visuelle (VB).

2. Procédé selon la revendication 1,
**caractérisé en ce**
**que** la prise de l'image de distance se fait par des mesures de distance aux points de distance (DP), le nombre des points de distance (DP) étant plus petit que le nombre des points d'image et au moins un point d'image étant associé à au moins un point de distance (DP).

3. Procédé selon la revendication 1 ou 2,
**caractérisé en ce**
**qu'**une mise au point des mesures de distance est variée dans la plage de détection (14a, 14b), de préférence en fonction de valeurs de distance mesurées, en particulier en fonction de la répartition des valeurs de distance.

4. Procédé selon la revendication 3,
**caractérisé en ce**
**que** la mise au point des mesures de distance se fait dans la plage de détection (14a, 14b) selon un modèle stochastique.

5. Procédé selon la revendication 3,
**caractérisé en ce**
**que** la mise au point des mesures de distance se fait dans la plage de détection (14a, 14b) selon un modèle régulier.

6. Procédé selon l'une des revendications précédentes,
**caractérisé en ce**
**que** des régions cohérentes (17a, 18a) dans l'image de distance sont identifiées par des points de distance.

7. Procédé selon l'une des revendications précédentes,
**caractérisé en ce**
**que** l'image visuelle (VB) et l'image de distance sont superposées.

8. Procédé selon la revendication 6 ou 7,
**caractérisé en ce**
**que** des objets sont identifiés dans l'image visuelle (VB) à l'aide d'une corrélation de régions cohérentes et de caractéristiques de l'image visuelle (VB).

9. Procédé selon l'une des revendications précédentes,
**caractérisé en ce**
**que** la position spatiale d'un objet, en particulier de la cible (17), est dérivée de l'image de distance dans la plage de détection (14a, 14b).

10. Procédé selon l'une des revendications précédentes,
**caractérisé en ce**
**que** les séquences spatiales de plusieurs objets sont dérivées de l'image de distance dans la plage de détection (14a, 14b).

11. Procédé selon l'une des revendications précédentes,
**caractérisé en ce**
**qu'**une identification d'un objet, en particulier une reconnaissance de cible, est effectuée à l'aide de l'image de distance.

12. Appareil géodésique (13), en particulier tachymètre aménagé pour la réalisation du procédé selon l'une des revendications 1 à 11, avec au moins
- une caméra (6), en particulier une caméra CCD ou CMOS, pour détecter une image visuelle (VB) d'une plage de détection (14a, 14b), la caméra (6) présentant une multitude de points d'image,
- une composante de mesure d'angle et/ou de distance,
- une unité de commande pour commander la composante de mesure d'angle et/ou de distance, en particulier au moyen de l'image visuelle (VB),
**caractérisé par**
des moyens pour la prise en même temps d'au moins deux points de distance discrets (DP) pour mettre à disposition une image de distance comme répartition spatiale de points de distance discrets (DP) dans la plage de détection (14a, 14b).

13. Appareil géodésique (13) selon la revendication 12 avec au moins
**caractérisé en ce**
**que** le nombre des points de distance (DP) pris pour prendre une image de distance est plus petit que le nombre des points d'image, au moins un point d'image étant associé à au moins un point de distance (DP).

14. Appareil géodésique (13) selon la revendication 12 ou 13 avec au moins
**caractérisé par**
un élément de focalisation (2) dans la trajectoire des rayons vers la caméra (6), les moyens étant placés pour prendre une image de distance dans la trajectoire des rayons après l'élément de focalisation (2).

15. Appareil géodésique (13) selon la revendication 14 avec au moins
**caractérisé par**
des moyens pouvant être amenés dans la trajectoire des rayons, en particulier en relation avec un élément de support qui peut tourner ou qui peut coulisser pour la mise au point des mesures de distance dans la plage de détection (14a, 14b), en particulier avec des micro-lentilles ou des éléments holographiques.

16. Produit de programme d'ordinateur avec code de programme qui est mémorisé sur un support qui peut être lu par une machine ou par un arbre électromagnétique pour réaliser le procédé selon l'une des revendications 1 à 11 lorsque le programme est exécuté dans un ordinateur.
